# EUROPÄISCHE PATENTSCHRIFT

(11) **EP 2 891 513 B1**
(45) Veröffentlichungstag und Bekanntmachung des Hinweises auf die Patenterteilung: **17.04.2019**
(21) Anmeldenummer: 14003941.3
(22) Anmeldetag: 24.11.2014
(51) Int. Cl.: B01D 53/86, B01D 53/88, F23G 7/06

(54) **Anlage zum Reinigen von Gasen, die einen hohen Inertgasanteil und einen geringen Methangasanteil aufweisen**
Plant for cleaning gases having a high inert gas proportion and a low methane gas proportion
Installation de nettoyage des gaz présentant une teneur élevée en gaz inerte et une faible teneur en gaz méthane

(30) Priorität: 04.01.2014 DE 102014000120
(43) Veröffentlichungstag der Anmeldung: 08.07.2015
(73) Patentinhaber: Eisenmann SE, 71032 Böblingen (DE)
(72) Erfinder: Rauser, Wolfgang, D-72224 Ebhausen (DE)
(74) Vertreter: Ostertag & Partner Patentanwälte mbB

(56) Entgegenhaltungen:
- EP-A1- 0 194 430
- EP-A1- 2 165 756
- EP-A2- 2 738 466
- DE-A1- 3 818 215
- US-A- 4 702 892

## Beschreibung

Die Erfindung betrifft eine Anlage zum Reinigen von Gasen, die einen hohen Inertgas und einen geringen Methangasanteil aufweisen, insbesondere von Offgasströmen aus Biogasanlagen.

Wenn vorliegend von "Reinigen" die Rede ist, so ist hiermit abkürzend die Entfernung des Methangasanteiles oder zumindest dessen Reduzierung in dem Gasgemisch gemeint, so dass eine möglichst hohe Reinheit des Inertgases im Sinne von möglichst geringem Methangehalt erzielt wird.

Die Problematik, welche der vorliegenden Erfindung zu Grunde liegt, lässt sich am besten anhand des wohl häufigsten Anwendungsfalles erläutern, nämlich bei der Reinigung von Offgasströmen, die aus Biogasanlagen stammen. Biogasanlagen werden bekanntlich dazu genutzt, aus organischen Materialien, wofür häufig organische Abfälle eingesetzt werden, Methangas zu gewinnen, das dann zur Erzeugung von Energie eingesetzt werden kann. Bei der Vergärung der organischen Materialien in den hierfür eingesetzten Fermentern entsteht eine Gasmischung, in welcher der Inertgasanteil (Kohlendioxid) überwiegt, die aber in nicht unerheblichem Anteil Methan als das gewünschte Produkt enthält. Dieses Methan wird beispielsweise mit Hilfe von Membranfiltern aus der Gasmischung entfernt und sodann einer weiteren Verwendung zugeführt. Eine vollständige Entfernung des Methangases aus der bei der Vergärung entstehenden Gasmischung ist im Allgemeinen nicht möglich. Grundsätzlich ging das Bestreben der Fachwelt bisher dahin, durch entsprechende Filtrationsmaßnahmen das in den sogenannten "Offgasströmen" der Biogasanlage noch enthaltene Methan ("Methanschlupf") so gering wie möglich zu halten. Der hier erforderliche Aufwand wächst jedoch stark an, umso geringer der noch verbleibende Methangasanteil ist.

Die von Methan weitestgehend befreiten Offgasströme von Biogasanlagen werden bisher nicht oder nur wenig genutzt. So kommt beispielsweise eine Verwendung des in diesen Offgasströmen enthaltenen Kohlendioxids in der Getränkeindustrie wegen des Restgehaltes an Methan nicht infrage.

Anlagen mit einem Wärmetauscher und einer Katalysatorpackung werden in EP0194430, US4702892 und EP2165756 offenbart.

Aufgabe der vorliegenden Erfindung ist es, eine Anlage der eingangs genannten Art zu schaffen, mit welcher der Methangehalt in dem zu reinigenden Gas weiter reduziert werden kann, insbesondere so weit, dass eine kommerzielle Nutzung der gereinigten Gase beispielsweise in der Getränkeindustrie möglich ist.

Diese Aufgabe wird erfindungsgemäß durch eine Anlage nach Anspruch 1 gelöst.

Erfindungsgemäß wird also das bisher von der Fachwelt verfolgte Konzept verlassen, den Anteil des Methans an den Offgasströmen durch immer höheren Filtrationsaufwand immer weiter zu reduzieren. Die Erfindung erkennt, dass der kommerzielle Wert des auf diese Weise gewonnenen zusätzlichen Methans in keinem Verhältnis zum Filtrationsaufwand steht. Sie nimmt daher in Kauf, dass die Offgasströme, welche die Biogasanlage verlassen, noch einen gewissen Anteil an Methan enthalten, der mit einem mäßigen Filtrationsaufwand in der Biogasanlage erreichbar ist. Die Erfindung wendet ihr Interesse dann weniger dem so verlorenen Methan als dem gereinigten Gas zu, dessen kommerzielle Verwertbarkeit in den Vordergrund rückt, sowie Umweltschutzgründen. Die erfindungsgemäße Anlage benötigt zu ihrem Betrieb praktisch keine zugeführte Fremdenergie, da sie die zum Aufheizen der Katalysatorpackung auf die erforderliche Temperatur nötige Energie aus dem Methangehalt selbst bezieht. Sie macht sich dabei zu nutze, dass die Reaktion des Methans, die durch den Katalysator bewirkt wird, exotherm ist. Allenfalls für ein Gebläse, welches die Bewegung der Gasströme durch die Vorrichtung bewirkt, wird eine geringe Menge an Fremdenergie benötigt. Auch der Steuerungsaufwand, der zum Betrieb der Anlage erforderlich ist, ist vergleichsweise gering. Eine SPS erübrigt sich; es können handelsübliche Hardware-Regler verwendet werden.

Zweckmäßig ist, wenn in Strömungsrichtung gesehen zwischen dem Wärmetauscher und der Katalysatorpackung ein erster Strömungsverteilraum vorgesehen ist. Hierdurch wird die Strömung des in die Katalysatorpackung eintretenden Gases vergleichmäßigt und so die Wirkung der Katalysatorpackung verbessert. Lokale Überhitzungen werden vermieden.

Ebenso zweckmäßig ist, wenn in Strömungsrichtung gesehen zwischen der Katalysatorpackung und dem Wärmetauscher ein zweiter Strömungsverteilraum vorgesehen ist. Auch durch diese Maßnahme soll die Strömung vergleichmäßigt werden und zwar sowohl in der Katalysatorpackung als auch auf dem Wege zum Wärmetauscher.

Es ist eine Heizvorrichtung vorgesehen, mit welcher das Gas nach dem Durchtritt durch die Katalysatorpackung und vor dem Eintritt in den Wärmetauscher erwärmbar ist. Diese Heizeinrichtung wird insbesondere für die Anfahrphase der Anlage aus "kaltem" Zustand eingesetzt, in dem der Katalysator noch nicht die zu seiner Funktion erforderliche Initialtemperatur erreicht hat. Die Heizeinrichtung kann auch dann benutzt werden, wenn bei sehr niedrigen Methangehalten im zu reinigenden Gas deren Wärmeinhalt zum Erreichen der erforderlichen Temperatur der Katalysatorpackung nicht für sich alleine ausreicht.

Vorteilhafterweise ist ein Temperatursensor vorgesehen, welcher die Temperatur des in die Katalysatorpackung eintretenden Gases misst und die Heizeinrichtung aktiviert, wenn die Temperatur einen unteren Grenzwert unterschreitet. Auf diese Weise lässt sich die Aufrechterhaltung der erforderlichen Betriebstemperatur der Katalysatorpackung auch für den Fall automatisch sicherstellen, dass der Methangehalt im zu reinigenden Gas weit absinkt.

Ebenso ist es vorteilhaft, wenn ein Temperatursensor vorgesehen ist, welcher die Temperatur des in die Katalysatorpackung eintretenden Gases misst und bei Überschreiten eines oberen Grenzwertes dieser Temperatur ein Ventil in einer Leitung öffnet, wodurch die Einmischung von Umgebungsluft in die aus der Katalysatorpackung austretenden Gase ermöglicht wird. Diese Maßnahmen dienen dem Schutz der Katalysatorpackung, die bei zu hohen Temperaturen beschädigt werden könnte.

Außerdem kann ein Temperatursensor vorgesehen sein, welcher die Temperatur innerhalb der Katalysatorpackung misst und bei Überschreiten eines oberen Grenzwertes dieser Temperatur ein Ventil in einer Leitung öffnet, wodurch die Einmischung von Umgebungsluft in das der Vorrichtung zugeführte zu reinigende Gase ermöglicht wird. Diese Maßnahme dient ebenfalls als Notmaßnahme dem Schutz der Katalysatorpackung. Ist nämlich der Methananteil in dem zugeführten zu reinigenden Gas sehr hoch, so könnte die katalytische Reaktion zu unzuträglich hohen Temperaturen in der Katalysatorpackung führen. Um diese zu vermeiden, wird bei Bedarf Umgebungsluft in das zu reinigende Gas eingemischt und auf diese Weise der Methangehalt in dieser reduziert.

Ein weiterer Temperatursensor kann die Temperatur des die Vorrichtung verlassenen Gases messen und bei Überschreiten eines oberen Grenzwertes dieser Temperatur ein Ventil in einer Leitung öffnen, wodurch die Einmischung von Umgebungsluft in das gereinigte Gas ermöglicht wird. Auch durch diese Maßnahme soll einer Situation vorgebeugt werden, in welcher zu hohe Temperaturen des gereinigten Gases Anlagenkomponenten gefährden könnten. Hierzu wird dem gereinigten Gas einfach in entsprechendem Ausmaße Umgebungsluft zugeführt, bis ein verträgliches Temperaturniveau erreicht ist.

Ausführungsbeispiele der Erfindung werden nachfolgend anhand der Zeichnung näher erläutert; es zeigen
- Figur 1:: schematisch eine Anlage zur katalytischen Reinigung des Offgases von Biogasanlagen;
- Figur 2:: eine Ansicht, ähnlich der Figur 1, eines zweiten Ausführungsbeispieles einer derartigen Anlage.

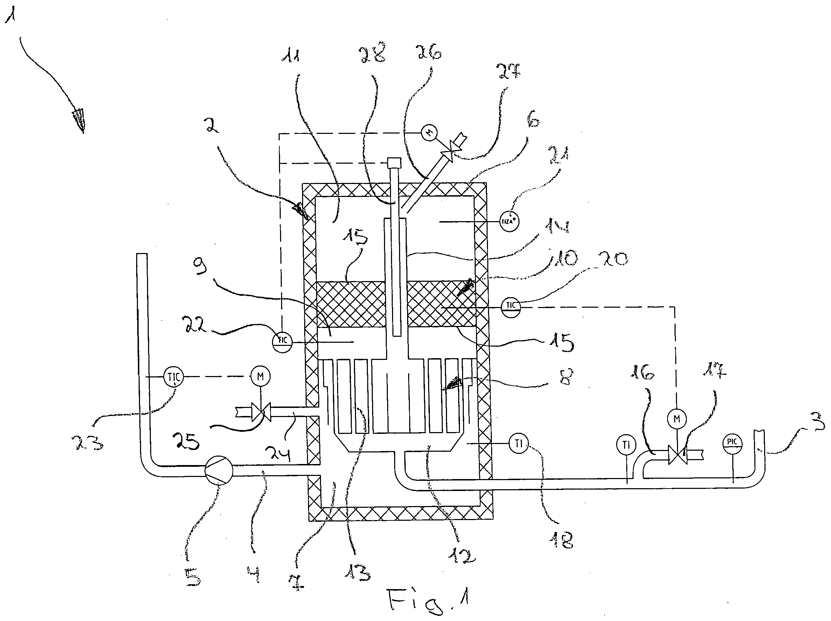

Die in Figur 1 dargestellte und insgesamt mit dem Bezugszeichen 1 gekennzeichnete Anlage dient der katalytischen Reinigung des Offgases, welches von einer in der Zeichnung nicht dargestellten Biogasanlage zugeführt wird. Ziel der Reinigung ist es, kleine Restmengen an Methan, die sich in dem zugeführten Offgas noch befinden (Schlupf), zu entfernen, so dass im Ergebnis ein hochreines Gas gewonnen wird, das im Wesentlichen aus inerten Gasen, im vorliegenden überwiegend aus CO₂, besteht. Dieses hochreine Gas kann dann weiterverwendet werden, beispielsweise in der Getränkeindustrie.

Die Anlage 1 umfasst als Hauptkomponente eine Vorrichtung 2 zur katalytischen Reinigung, der über eine Leitung 3 (Einlass) das zu reinigende Offgas zugeführt und über eine Leitung 4 (Auslass) mittels eines Gebläses 5 das Reingas entnommen werden kann. Die Vorrichtung 2 umfasst einen doppelwandigen mit Isoliermaterial gefüllten und als Außengehäuse dienenden Mantel 6, innerhalb dessen alle essentiellen Komponenten der Vorrichtung 2 angeordnet sind. Von unten nach oben finden sich innerhalb des Mantels 2 ein Ausströmungsraum 7 für das Reingas, ein Rohrbündelwärmetauscher (Rekuperator) 8, ein erster Strömungsverteilraum 9, eine Katalysatorpackung 10 sowie ein zweiter Strömungsverteilraum 11.

Die genauere Betrachtung der oben genannten Komponenten zeigt Folgendes:

Der Rekuperator 8 besitzt im unteren Bereich einen Einströmraum 12, in den von unten her die das zu reinigende Offgas führende Leitung 3 einmündet. Der Einströmraum 12 kommuniziert mit dem ersten Strömungsverteilraum 9 über eine Vielzahl von Röhren 13 verhältnismäßig kleinem Durchströmungsquerschnittes. In dem ersten Strömungsverteilraum 9 wird, wie dessen Name besagt, die Offgasströmung, welche den Rekuperator 8 durchsetzt hat, vergleichmäßigt, so dass sie in einer homogenen Strömung von unten her in die Katalysatorpackung 10 eintreten kann.

Die Katalysatorpackung 10 besteht bevorzugt aus Edelmetalldotierten Keramikteilchen, beispielsweise aus mit Platin oder Palladium dotierten Aluminiumoxidkugeln. Derartige Katalysatoren sind im Handel erhältlich. Oben und unten wird die Katalysatorpackung 10 durch Sieb- oder Lochstrukturen 15 begrenzt, so dass die Gase ein- bzw. ausströmen können, das Katalysatormaterial selbst jedoch zwischen diesen Sieb- oder Lochstrukturen 15 gehalten wird.

Der als verunreinigter Offgasstrom von unten in die Katalysatorpackung 10 eintretende Gasstrom wird in einer weiter unten näher beschriebenen Weise durch den Katalysator unter Wärmeentwicklung von restlichem Methan befreit und tritt nunmehr an der Oberseite der Katalysatorpackung 10 als Reingasstrom aus. Dieser Reingasstrom wird im zweiten Strömungsverteilraum 11 so umgelenkt, dass er von oben her in ein oben offenes Rohr 14 eintreten kann. Das Rohr 14 durchsetzt die Katalysatorpackung 10 mittig und mündet unten in den Rekuperator 8. Das hier ausströmende Reingas kann nunmehr innerhalb des Rekuperators 8 die Zwischenräume zwischen den Rohren 13 durchströmen und gelangt so letztendlich in den Ausströmraum 7, aus dem es die Vorrichtung 2 über die oben schon angesprochene Leitung 4 verlässt.

Oben wurde im Wesentlichen der grobe Aufbau der Vorrichtung 2 beschrieben. Diese Vorrichtung 2 weist darüber hinaus verschiedene Einrichtungen auf, welche sowohl das Anfahren der Vorrichtung 2 aus "kaltem" Zustand als auch den laufenden Dauerbetrieb kontrollieren und regeln. Diese werden nachfolgend näher erläutert:
Eine Leitung 16, in welcher ein mit einem Stellantrieb versehenes Ventil 17 liegt, mündet in die Leitung 3, welche den Offgasstrom führt, und ist bei geöffnetem Ventil 17 mit der Außenatmosphäre verbunden. Ein erster Temperatursensor 18 misst die Temperatur des Reingases im Ausströmraum 7, ein zweiter Temperatursensor 22 die Temperatur des den ersten Strömungsverteilerraum 9 durchströmenden Gases, ein dritter Temperatursensor 20 die Temperatur, die im Inneren der Katalysatorpackung 10 herrscht, ein vierter Temperatursensor 21 die Temperatur des Gases, welches durch den zweiten Strömungsverteilraum 11 fließt, und ein fünfter Temperatursensor 23 schließlich die Temperatur des aus der Vorrichtung 2 über die Leitung 4 abströmenden Reingases.

Über ein Rohr 24, in dem ein motorgesteuertes Ventil 25 liegt, kann Umgebungsluft in den Ausströmraum 7 und über ein Rohr 26, in dem ein motorgesteuertes Ventil 27 liegt, Umgebungsluft in den zweiten Strömungsverteilraum 11 eingebracht werden.

Ein elektrischer Heizstab 28 ist von oben her in das Rohr 14 eingeführt und durchsetzt auf diese Weise wie dieses die Katalysatorpackung 10. Mit ihm kann das Gas, welches das Rohr 14 durchströmt, erwärmt werden.

Die oben beschriebene Anlage 1 wird wie folgt betrieben:
Zunächst sei diejenige Betriebsphase betrachtet, bei der die Anlage 1 aus dem "kalten" Zustand hochgefahren wird. Dies bedeutet, dass die Katalysatorpackung 10 sich noch auf einer zu niedrigen Temperatur befindet, um ihre katalytische Wirkung entfalten zu können. Eine typische Initialtemperatur für die zum Einsatz kommenden Katalysatoren beträgt beispielsweise 470°C. Über die Leitung 3 wird methanschlupfhaltiges Offgas zugeführt. Dieses durchströmt in der ersten Anfangsphase den Rekuperator 8 zunächst ohne Erwärmung, da ein warmer Gas-Gegenstrom fehlt. Es durchtritt die Katalysatorpackung 10, ohne, dass eine katalytische Zersetzung des Methans stattfinden würde. Es durchströmt sodann das Rohr 14 von oben her und wird hier mit Hilfe des Heizstabes 28 erwärmt. Wenn es jetzt den Rekuperator 8 ein zweites Mal durchströmt, kann es das weiter über die Leitung 3 zuströmende Offgas erwärmen. Dabei kühlt es sich ab.

Nach einer gewissen Zeit stellen sich Gas an den verschiedenen Stellen der Vorrichtung 2 Temperaturen ein, in denen ein Dauerbetrieb der Anlage 1 möglich ist. Insbesondere wird die Initialtemperatur der Katalysatorpackung 10 überschritten und es findet die exotherme katalytische Zersetzung des Methans statt. Dann kann im Allgemeinen der Heizstab 28 abgeschaltet werden. Der Dauerbetrieb wird auf folgende Weise geregelt und überwacht:
Die Temperatur des aus der Vorrichtung 2 ausströmenden Gases wird mit Hilfe des Temperatursensors 23 gemessen. Sollte diese Temperatur einen oberen Grenzwert überschreiten, wird durch Öffnen des Ventils 25 in den Ausströmraum 7 Umgebungsluft eingegeben, so dass durch Vermischung dieser Umgebungsluft mit dem Reingas eine Kühlung des über die Leitung 4 ausströmenden Gases bewirkt wird.

Bei dem oben geschilderten katalytischen Prozess erwärmt sich insbesondere auch die Katalysatorpackung 10. Wie stark diese Erwärmung ist, hängt unter anderem auch von der Beladung des Offgases mit Methan ab. Bei einer sehr geringen Beladung mit Methan wird die Wärme, die bei der katalytischen Umsetzung erzeugt wird, für sich alleine nicht ausreichen, die optimale Temperatur der Katalysatorpackung 10 aufrecht zu erhalten. In diesem Falle wird mit Hilfe des Heizstabes 28 das das Rohr 14 durchtretende Gas nachgeheizt. Dies hat zur Folge, dass das den Rekuperator 8 zum ersten Mal durchströmende Offgas stärker erwärmt in den Strömungsverteilraum 9 und von dort in die Karalysatorpackung 10 eintritt. Diese wird dadurch in der gewünschten Weise auf höhere Temperatur gebracht.

Zur Regelung dieses Vorganges wird die Temperatur des Gases im Strömungsverteilraum 9 mit Hilfe des Temperatursensors 22 überwacht. Solange diese nicht einen bestimmten Mindestwert überschreitet, wird der Heizstab 28 aktiviert.

In den meisten Fällen dürfte jedoch die Beladung des über die Leitung 3 zugeführten Offgases mit Methan ausreichen, um die Katalysatorpackung 10 auf die gewünschte oder eine höhere Temperatur zu bringen. Ein bevorzugter Temperaturwert ist hier beispielsweise 620°C. Die Regelung auf den gewünschten Wert geschieht in diesem Falle wie folgt:
Eine zu hohe Beladung des Offgases mit Methan wirkt sich unter anderem dadurch aus, dass das den Strömungsverteilraum 9 durchströmende Gas eine zu hohe Temperatur bekommt. Dies ist eine Folge davon, dass das den Rekuperator 8 in Gegenrichtung durchströmende Gas in der Katalysatorpackung 10 zu heiß geworden ist. Stellt der Temperatursensor 22 in dem Strömungsverteilraum eine Gastemperatur fest, die einen Maximalwert überschreitet, so wird das Ventil 27 geöffnet. Jetzt tritt kalte Umgebungsluft in den Strömungsverteilraum 11 ein und vermischt sich mit dem aus der Katalysatorpackung austretenden Gas. Das das Rohr 14 durchströmende Gasgemisch wird daurch kälter mit der Folge, dass das den Rekuperator 8 zum ersten Mal durchströmende Offgas weniger stark vorgewärmt wird und den Strömungsverteilraum 9 mit niedrigerer Temperatur durchströmt.

Sollte diese Regelung nicht ausreichen und droht die Temperatur der Katalysatorpackung auf einen gefährlich hohen Wert anzusteigen, geschieht Folgendes: Die Temperatur in der Katalysatorpackung 10 wird mit Hilfe des Temperatursensors 20 überwacht. Überschreitet diese Temperatur einen obersten zulässigen Wert, so wird das Ventil 17 in der Leitung 16 geöffnet und das die Leitung 3 durchströmende Offgas durch Umgebungsluft verdünnt, so dass die Methanlast, die in der Katalysatorpackung 10 entfernt wird, verringert und damit auch die dort herrschende Temperatur reduziert wird.

Durch die oben beschriebenen Maßnahmen ist sowohl ein stabiles Anfahren als auch ein stabiler Dauerbetrieb der Anlage 1 möglich. In den meisten Fällen, in denen die Beladung des Offgases mit Methan hoch genug ist, wird zum Betrieb der Anlage 1 praktisch keine externe Energie benötigt, sieht man von der geringen zum Betrieb des Gebläses 5 erforderlichen elektrischen Leistung ab.

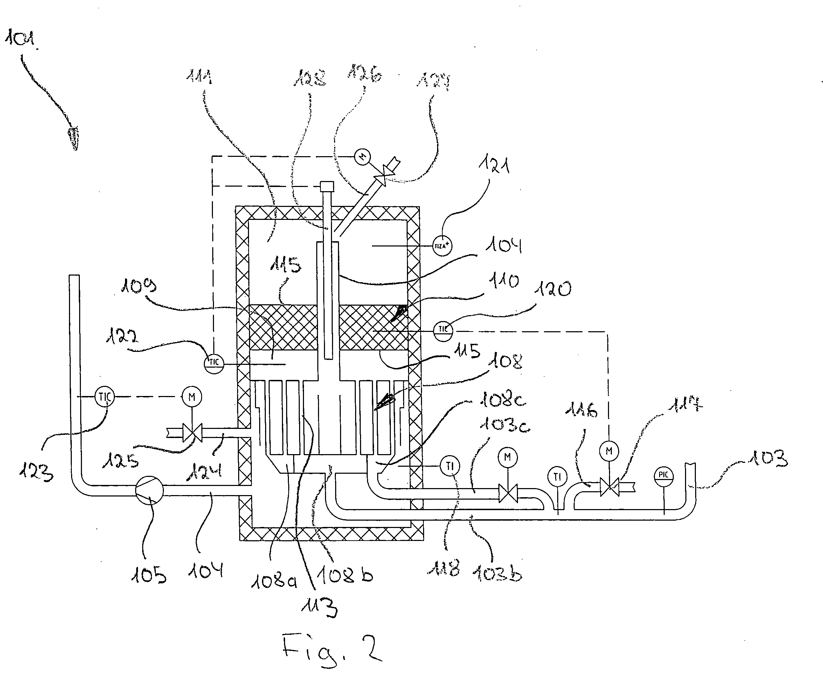

Figur 2 zeigt ein zweites Ausführungsbeispiel der Erfindung, welches dem oben anhand der Figur 1 beschriebenen sehr ähnelt. Entsprechende Teile sind daher mit demselben Bezugszeichen zuzüglich 100 gekennzeichnet.

Der einzige nennenswerte Unterschied zwischen den beiden Ausführungsbeispielen ist, dass beim denjenigen der Figur 2 der Rekuperator 108 in mehrere voneinander getrennte Sektoren (Abteile) 108a, 108b, 108c unterteilt ist, die getrennt voneinander über Leitungen 103b, 103c (die zum Abschnitt 108a führende Leitung, welche das Bezugszeichen 103a tragen würde, ist in der Zeichnung nicht erkennbar) mit zu reinigendem Offgas versorgt werden. Diese Maßnahme ist hauptsächlich bei Anlagen 102 größerer Kapazität empfehlenswert. Durch sie wird die Durchströmung des Rekuperators 108 vergleichmäßigt und so der Wärmetausch verbessert. Auch kann ein sehr viel größeres Spektrum des anfallenden Offgas-Volumenstromes gereinigt werden.

## Patentansprüche

1. Anlage zum Reinigen von Gasen, die einen hohen Inertgasanteil und einen geringen Methangasanteil aufweisen, insbesondere von Offgasströmen aus Biogasanlagen, wobei die Anlage eine Vorrichtung (2; 102) aufweist, die umfasst:
a) ein Außengehäuse (6; 106) mit einem Einlass (3; 103) für das zu reinigende Gas und einem Auslass (4; 104) für das gereinigte Gas;
b) einen Wärmetauscher (8; 108), der von dem zu reinigenden Gas ein erstes Mal durchtreten wird, wobei der Wärmetauscher (8; 108) ein Rohrbündelwärmetauscher ist;
c) eine Katalysatorpackung (10; 110), in welche das zu reinigende Gas nach dem Durchtritt durch den Wärmetauscher (8; 108) eintritt, in welcher der Methangehalt unter Wärmeentwicklung reduziert wird und welche das Gas als gereinigtes Gas verlässt;
wobei
d) das gereinigte Gas den Wärmetauscher (8; 108) ein zweites Mal durchtritt und dabei in Wärmeaustausch mit dem den Wärmetauscher (8; 108) durchströmenden zu reinigenden Gas steht; und
e) eine Heizeinrichtung (28; 128) vorgesehen ist, mit welcher das Gas nach dem Durchtritt durch die Katalysatorpackung (10; 110) und vor dem Eintritt in den Wärmetauscher (8; 108) erwärmbar ist.

2. Anlage nach Anspruch 1, **dadurch gekennzeichnet, dass** in Strömungsrichtung gesehen zwischen dem Wärmetauscher (8; 108) und der Katalysatorpackung (10; 110) ein erster Strömungsverteilraum (9; 109) vorgesehen ist.

3. Anlage nach Anspruch 1 und 2, **dadurch gekennzeichnet, dass** in Strömungsrichtung gesehen zwischen der Katalysatorpackung (10; 110) und dem Wärmetauscher (8; 108) ein zweiter Strömungsverteilraum (11; 111) vorgesehen ist.

4. Anlage nach Anspruch 1, **dadurch gekennzeichnet, dass** ein Temperatursensor (22) vorgesehen ist, welcher die Temperatur des in die Katalysatorpackung (10; 110) 20 eintretenden Gases misst und die Heizeinrichtung (28; 128) aktiviert, wenn die Temperatur einen unteren Grenzwert unterschreitet.

5. Anlage nach einem der vorhergehenden Ansprüche, **dadurch gekennzeichnet, dass** ein Temperatursensor (22; 122) vorgesehen ist, welcher die Temperatur des in die Katalysatorpackung (10; 110) eintretenden Gases misst und bei Überschreiten eines oberen Grenzwertes dieser Temperatur ein Ventil (27; 127) in einer Leitung (26; 126) öffnet, wodurch die Einmischung von Umgebungsluft in die aus der Katalysatorpackung (10; 110) austretenden Gase ermöglicht wird.

6. Anlage nach einem der vorhergehenden Ansprüche, **dadurch gekennzeichnet, dass** ein Temperatursensor (20; 120) vorgesehen ist, welcher die Temperatur innerhalb der Katalysatorpackung (10; 110) misst und bei Überschreiten eines oberen Grenzwertes dieser Temperatur ein Ventil (17; 117) in einer Leitung (16; 116) öffnet, wodurch die Einmischung von Umgebungsluft in das der Vorrichtung (2; 102) zugeführte zu reinigende Gas ermöglicht wird.

7. Anlage nach einem der vorhergehenden Ansprüche, **dadurch gekennzeichnet, dass** ein Temperatursensor (23; 123) vorgesehen ist, welcher die Temperatur des die Vorrichtung (2; 102) verlassenden Gases misst und bei Überschreiten eines oberen Grenzwertes dieser Temperatur ein Ventil (25; 125) in einer Leitung (24; 124) öffnet, wodurch die Einmischung von Umgebungsluft in das gereinigte Gas ermöglicht wird.

## Claims

1. Assembly for purifying of gases, which have a high inert gas and a low methane gas proportion, in particular of offgas flow from biogas plants,
wherein the assembly comprises a device (2; 102) having:
a) an outer housing (6; 106) having an inlet (3; 103) for the gas to be purified and an outlet (4; 104) for the purified gas;
b) a heat exchanger (8; 108) which is passed through by the gas to be purified a first time, wherein the heat exchanger (8; 108) is a shell and tube heat exchanger;
c) a catalyst packing (10; 110) into which the gas to be purified enters after passing through the heat exchanger (8; 108), the methane proportion being reduced in the catalyst packing (10; 110) under heat generation and the gas exiting the catalyst packing (10; 110) as a purified gas;
wherein
d) the purified gas passes through the heat exchanger (8; 108) a second time while in heat exchange with the to be purified gas passing through the heat exchanger (8; 108); and
e) a heating apparatus (28; 128) is provided, with which the gas can be heated after passing through the catalyst packing (10; 110) and before entering the heat exchanger (8; 108).

2. Assembly according to claim 1, **characterized in that** a first flow distribution space (9; 109) is provided, in the direction of flow, between the heat exchanger (8; 108) and the catalyst packing (10; 110).

3. Assembly according to claims 1 and 2, **characterized in that** a second flow distribution space (11; 111) is provided, in the direction of flow, between the catalyst packing (10; 110) and the heat exchanger (8; 108).

4. Assembly according to claim 1, **characterized in that** a temperature sensor (22) is provided, which measures the temperature of the gas entering the catalyst packing (10; 110) and activates the heating apparatus (28; 128) when the temperature falls below a lower limit.

5. Assembly according to one of the preceding claims, **characterized in that** a temperature sensor (22; 122) is provided, which measures the temperature of the gas entering the catalyst packing (10; 110) and opens a valve (27; 127) in a conduit (26; 126) when an upper limit of this temperature is exceeded, whereby the mixing of ambient air into the gas exiting the catalyst packing (10; 110) is enabled.

6. Assembly according to one of the preceding claims, **characterized in that** a temperature sensor (20; 120) is provided, which measures the temperature within the catalyst packing (10; 110) and opens a valve (17; 117) in a conduit (16; 116) when an upper limit of this temperature is exceeded, whereby the mixing of ambient air into the to be purified gas guided to the device (2; 102) is enabled.

7. Assembly according to one of the preceding claims, **characterized in that** a temperature sensor (23; 123) is provided, which measures the temperature of the gas exiting the device (2; 102) and opens a valve (25; 125) in a conduit (24; 124) when an upper limit of this temperature is exceeded, whereby the mixing of ambient air into the purified gas is enabled.

## Revendications

1. Installation d'épuration de gaz qui présentent une haute teneur en gaz inerte et une faible teneur en méthane, en particulier d'effluents gazeux d'installations de biogaz,
ladite installation présentant un dispositif (2 ; 102) qui comprend :
a) un carter extérieur (6 ; 106) ayant une entrée (3 ; 103) pour le gaz à épurer et une sortie (4 ; 104) pour le gaz épuré ;
b) un échangeur de chaleur (8 ; 108) à travers lequel le gaz à épurer passe une première fois, lequel échangeur de chaleur (8 ; 108) est un échangeur de chaleur à faisceau tubulaire ;
c) un garnissage de catalyseur (10 ; 110) dans lequel le gaz à épurer entre après avoir passé à travers l'échangeur de chaleur (8 ; 108), dans lequel la teneur en méthane est réduite avec production de chaleur et que le gaz quitte sous forme de gaz épuré ;
dans laquelle
d) le gaz épuré passe à travers l'échangeur de chaleur (8 ; 108) une deuxième fois et est ainsi en échange de chaleur avec le gaz à épurer passant à travers l'échangeur de chaleur (8 ; 108) ; et
e) un dispositif de chauffage (28 ; 128) est prévu, avec lequel le gaz peut être chauffé après son passage à travers le garnissage de catalyseur (10 ; 110) et avant son entrée dans l'échangeur de chaleur (8 ; 108).

2. Installation selon la revendication 1, **caractérisée en ce qu'**une première chambre de répartition d'écoulement (9 ; 109) est prévue entre l'échangeur de chaleur (8 ; 108) et le garnissage de catalyseur (10 ; 110), vu dans la direction d'écoulement.

3. Installation selon les revendications 1 et 2, **caractérisée en ce qu'**une deuxième chambre de répartition d'écoulement (11 ; 111) est prévue entre le garnissage de catalyseur (10 ; 110) et l'échangeur de chaleur (8 ; 108), vu dans la direction d'écoulement.

4. Installation selon la revendication 1, **caractérisée en ce qu'**un capteur de température (22) est prévu, qui mesure la température du gaz entrant dans le garnissage de catalyseur (10 ; 110) et active le dispositif de chauffage (28 ; 128) lorsque la température tombe en dessous d'une valeur limite inférieure.

5. Installation selon l'une des revendications précédentes, **caractérisée en ce qu'**un capteur de température (22 ; 122) est prévu, qui mesure la température du gaz entrant dans le garnissage de catalyseur (10 ; 110) et, en cas de dépassement d'une valeur limite supérieure de cette température, ouvre une soupape (27 ; 127) dans une conduite (26 ; 126), permettant ainsi le mélange d'air ambiant avec les gaz sortant du garnissage de catalyseur (10 ; 110).

6. Installation selon l'une des revendications précédentes, **caractérisée en ce qu'**un capteur de température (20 ; 120) est prévu, qui mesure la température à l'intérieur du garnissage de catalyseur (10 ; 110) et, en cas de dépassement d'une valeur limite supérieure de cette température, ouvre une soupape (17 ; 117) dans une conduite (16 ; 116), permettant ainsi le mélange d'air ambiant avec le gaz à épurer amené au dispositif (2 ; 102).

7. Installation selon l'une des revendications précédentes, **caractérisée en ce qu'**un capteur de température (23 ; 123) est prévu, qui mesure la température du gaz qui quitte le dispositif (2 ; 102) et, en cas de dépassement d'une valeur limite supérieure de cette température, ouvre une soupape (25 ; 125) dans une conduite (24 ; 124), permettant ainsi le mélange d'air ambiant avec le gaz épuré.
